# FASCICULE DE BREVET EUROPEEN

(11) **EP 2 819 912 B1**
(45) Date de publication et mention de la délivrance du brevet: **13.04.2016**
(21) Numéro de dépôt: 13712845.0
(22) Date de dépôt: 26.02.2013
(51) Int. Cl.: B62D 25/08

(54) **BOITE A EAU DE VEHICULE AUTOMOBILE POUVANT ABSORBER UNE PARTIE DE L'ENERGIE D'UN CHOC PIETON ET STRUCTURE AVANT CORRESPONDANTE**
KRAFTFAHRZEUG-WASSERKASTEN ZUR ABSORPTION EINES TEILS DER ENERGIE EINES FUSSGÄNGERAUFPRALLS UND ENTSPRECHENDE FRONTSTRUKTUR
MOTOR VEHICLE WATER BOX CAPABLE OF ABSORBING PART OF THE ENERGY OF A PEDESTRIAN IMPACT, AND CORRESPONDING FRONT STRUCTURE

(30) Priorité: 29.02.2012 FR 1251825
(43) Date de publication de la demande: 07.01.2015
(73) Titulaire: Renault S.A.S., 92100 Boulogne-Billancourt (FR); Faurecia Intérieur Industrie, 92000 Nanterre (FR)
(72) Inventeur: CABO, José, F-78640 Saint Germain De La Grange (FR); JOSSE, Yannick, F-94300 Vincennes (FR); HAYOTTE, Sébastien, F-92500 Rueil Malmaison (FR)
(86) Numéro de dépôt international: PCT/FR2013/050385
(87) Numéro de publication internationale: WO 2013/128106

(56) Documents cités:
- EP-A1- 1 568 578
- FR-A1- 2 901 757

## Description

L'invention concerne une boîte à eau pour véhicule automobile, et plus particulièrement une boîte à eau destinée à minimiser les blessures occasionnées à un piéton lors d'un choc tête contre capot du véhicule en absorbant une partie de l'énergie du choc. L'invention concerne également une structure avant de véhicule équipée d'une telle boîte à eau.

De manière classique, un véhicule automobile comprend une boîte à eau située dans le compartiment moteur à proximité de la cloison (tablier) séparant l'habitacle du compartiment moteur et à la jonction du capot et du bord inférieur du pare-brise. Cette boîte à eau est destinée à recueillir les eaux de ruissellement s'écoulant du pare-brise et à servir de source d'air de ventilation pour l'habitacle.

Une boite à eau a la forme générale d'une gouttière dirigée suivant l'axe Y, dont l'ouverture est tournée vers le haut et est fermée par une grille d'auvent. La boîte à eau comporte notamment un rebord avant ayant une arête supérieure tournée vers le haut sur laquelle est monté un joint. Lors de la fermeture du capot, la doublure de capot (élément de rigidification coté intérieur du capot) vient coopérer en appui sur ce joint pour séparer de façon relativement étanche le compartiment moteur de l'espace intérieur de la boite à eau. La boîte à eau doit ainsi présenter une certaine rigidité afin d'assurer la compression du ou des joints qu'elle supporte et de pouvoir éventuellement supporter d'autres éléments du véhicule, par exemple le bocal de liquide de freinage.

Lors d'un choc piéton, la tête du piéton est susceptible de venir heurter la zone du capot située sensiblement au niveau de la boîte à eau, et notamment au niveau du joint porté par le bord avant de la boîte à eau. Dans un premier temps, le capot se déforme sous l'effet du choc et absorbe ainsi une partie de l'énergie du choc. Le joint porté par le bord avant de la boîte à eau se déforme ensuite jusqu'à sa compression maximale. Le déplacement du capot est alors stoppé par le bord avant de la boîte à eau, relativement rigide, ce qui peut engendrer des lésions crâniennes au piéton.

Afin de réduire les dommages corporels occasionnés à un piéton, certaines boîtes à eau comportent des zones fragiles localisées qui se rompent sous l'effet d'un choc tel que décrit, par exemple, dans le document EP 1 568 578. Toutefois, de telles zones fragiles localisées ne permettent pas d'amortir ou d'absorber le choc subi par le piéton, mais uniquement d'effacer la zone dure formée par la boîte à eau. Cet effacement rallonge la course du capot qui peut éventuellement se déformer davantage en absorbant de l'énergie. Cependant, en bout de course, le capot va venir heurter une autre partie raide qui peut provoquer des lésions si trop d'efforts sont transmis au piéton. Ainsi, plus la course du capot est courte, plus les dommages seront importants.

Par ailleurs, l'environnement d'une boîte à eau est généralement contraint, notamment du fait de la proximité de certains éléments de structure rigides du véhicule. Ainsi, la hauteur de la boîte à eau est limitée à proximité des coupelles d'amortisseur. Ces contraintes ne permettent pas de dégager suffisamment d'espace libre pour réaliser des parois support de joint présentant une raideur suffisante et susceptibles d'absorber l'énergie d'un choc.

En outre, il n'est pas possible d'utiliser une matière permettant d'absorber l'énergie pour réaliser le bord avant supportant le joint : ce bord avant ne serait pas assez rigide pour appliquer le joint de manière étanche sur la face inférieure du capot en fonctionnement normal du véhicule.

Enfin, la boîte à eau ne doit pas être trop fragilisée afin d'éviter de se casser en utilisation normale du véhicule.

L'invention vise à pallier ces inconvénients en proposant une boîte à eau permettant de réduire les dommages corporels occasionnés à un piéton en amortissant ou absorbant le choc subit par un piéton heurtant le capot du véhicule, tout en présentant une rigidité suffisante en utilisation normale pour remplir sa fonction.

A cet effet, l'objet de l'invention concerne une boîte à eau destinée à être montée sur une structure avant d'un véhicule, cette boîte à eau comportant :
- un élément central et deux éléments latéraux situés de part et d'autre de l'élément central et solidaires de celui-ci,
- un bord avant s'étendant le long desdits éléments central et latéraux, ce bord avant étant sensiblement vertical et dirigé vers le haut transversalement au véhicule lorsque la boîte à eau est montée sur le véhicule,
caractérisée en ce que
- l'élément central comprend une poutre de renfort s'étendant sur sensiblement toute sa longueur sous son bord avant, ladite poutre de renfort étant conformée pour agir en flexion sous l'effet d'un choc piéton,
- le bord avant de chaque élément latéral comprend au moins une zone de flexion conformée pour permettre une flexion du bord avant sous l'effet d'un choc piéton.

Cet agencement particulier de la boîte à eau permet un amortissement ou une absorption d'un choc par absorption d'énergie résultant de la flexion de la poutre de renfort au niveau de l'élément central et/ou de la flexion de la zone de flexion au niveau d'un élément latéral et ce quelque soit la position de l'impact le long de la boîte à eau.

Un tel agencement permet d'obtenir une boîte à eau qui réponde aux exigences de sécurité imposées par la réglementation, par exemple la réglementation européenne ou demandées par les consommateurs (tests consuméristes de type EuroNCAP). Ces réglementations ou tests consuméristes imposent des critères différents selon la position du choc suivant la direction transversale du véhicule. Ainsi, les critères sont généralement plus sévères au niveau des extrémités latérales qu'au niveau de la partie centrale. Ces extrémités latérales peuvent être définies comme représentant 1/3 de la moitié de la largeur du véhicule, les 2/3 restants de cette moitié correspondant à la partie centrale.

Avantageusement et de manière non limitative, les éléments latéraux de la boîte à eau selon l'invention s'étendent sur une longueur correspondant au tiers de la moitié de la longueur de la boîte à eau, l'élément central occupant le reste de la moitié de la longueur de la boîte à eau. Ainsi, les critères de sécurité sont généralement plus sévères au niveau des éléments latéraux qu'au niveau de l'élément central.

L'élément central peut être une pièce distincte des éléments latéraux ou être réalisée d'une pièce avec ceux-ci.

Un choc piéton, notamment un choc tête contre capot, correspond généralement selon les réglementations ou les tests consuméristes à un impact de haut en bas suivant une direction oblique formant un angle de 50° ± 15° par rapport à l'axe longitudinal horizontal du véhicule (axe X).

Les caractéristiques en flexion de la poutre de renfort de l'élément central sont calculées afin d'obtenir une flexion suffisante en cas de choc piéton pour limiter les dommages corporels tout en présentant une rigidité suffisante en fonctionnement normal du véhicule pour assurer le plaquage du joint supporté par le bord avant contre le capot fermé. Ces caractéristiques pourront être déterminées en fonction de critères de sécurité donnés par les réglementations ou les tests consuméristes, ces critères pouvant être la distance d'enfoncement maximale de la boîte à eau, l'effort d'enfoncement maximal de la boîte à eau.

Avantageusement et de manière non limitative, la poutre de renfort peut être formée d'une pluralité de nervures sensiblement perpendiculaires au bord avant, ces nervures étant logées dans une gorge à section transversale en U. On obtient ainsi une poutre pouvant fléchir sans se rompre sous l'effet d'un choc piéton. L'ouverture de la gorge à section transversale en U sera de préférence dirigée vers le bas, dans une direction opposée au bord avant. La rigidité en flexion de la poutre de renfort peut par exemple être augmentée ou réduite en augmentant ou réduisant le nombre de nervures.

En fonction du comportement en flexion recherché pour chaque élément latéral, ces derniers pourront comprendre une seule zone de flexion continue ou plusieurs zones de flexion discontinues.

Avantageusement et de manière non limitative, la zone de flexion de chaque élément latéral s'étend parallèlement à la direction longitudinale du bord avant sur une partie de la hauteur et de la longueur du bord avant de chaque élément latéral.

Avantageusement et de manière non limitative, la zone de flexion peut être obtenue de manière simple et peu couteuse en réalisant une zone d'épaisseur amoindrie par rapport à l'épaisseur du reste du bord avant. La zone de flexion peut également présenter une épaisseur nulle, c'est-à-dire être une ouverture. La partie du bord avant située au dessus de la zone de flexion présente un comportement en flexion similaire au comportement en flexion d'une poutre.

Lorsque la zone de flexion est une ouverture, selon la position de celle-ci, il peut être préférable de prévoir l'obturation de l'ouverture avec un matériau flexible afin d'éviter le passage de l'eau par l'ouverture. Il peut s'agir d'une simple bande adhésive, d'un joint souple ou de tout autre matériau adapté qui ne modifie pas le comportement en flexion du bord avant au niveau de la zone de flexion mais qui assure l'étanchéité de la boîte à eau.

Les dimensions de cette zone de flexion, notamment sa hauteur, sa longueur et son épaisseur pour une zone de flexion d'épaisseur réduite, seront calculées afin d'obtenir une flexion suffisante en cas de choc piéton pour limiter les dommages corporels tout en présentant une rigidité suffisante en fonctionnement normal du véhicule pour assurer le plaquage du joint supporté par le bord avant contre le capot fermé. Les caractéristiques en flexion de la zone de flexion pourront notamment être déterminées en fonction de critères de sécurité donnés par les réglementations ou les tests consuméristes, ces critères pouvant être la distance d'enfoncement maximale de la boîte à eau, l'effort d'enfoncement maximal de la boîte à eau.

A titre d'exemple, une zone de flexion pourra présenter une hauteur de 2 à 5 mm et/ou présenter une épaisseur inférieure ou égale à 1,5 mm, de préférence inférieure ou égale à 0,8mm.

La boîte à eau pourra être réalisée en matière plastique, par exemple par injection.

La position de la zone de flexion pourra être déterminée en fonction des zones possibles d'impact avec un piéton et/ou être localisées aux endroits de plus forte raideur de la boîte à eau et/ ou être imposée par des réglementations ou tests consuméristes.

Avantageusement et de manière non limitative, la zone de flexion peut être située au niveau d'une partie arrondie du bord avant formant un coin de la boîte à eau.

Avantageusement et de manière non limitative, le bord avant de chaque élément latéral présente une ligne de rupture conformée pour se rompre sous l'effet d'un choc piéton, après flexion de ladite au moins une zone de flexion, ladite ligne de rupture s'étendant sensiblement parallèlement à la direction longitudinale du bord avant.

La rupture d'un élément latéral de boîte à eau intervient ainsi après la flexion de cet élément latéral de sorte que l'énergie d'un choc piéton est d'abord absorbée par la zone de flexion, puis l'élément latéral s'efface sous l'effet de la rupture de la ligne de rupture.

Cette ligne de rupture peut se présenter sous la forme d'une ligne de striction prolongeant sensiblement la zone de flexion de chaque élément latéral. Par exemple, cette ligne de rupture peut s'étendre sur un côté de chaque élément latéral, s'étendant suivant la direction longitudinale du véhicule lorsque la boîte à eau est montée sur le véhicule. Cette ligne de rupture peut par exemple former une striction à section transversale en V couché, dont l'ouverture est dirigée vers l'avant du véhicule avant que lors de la cassure, le bord avant bascule vers l'avant du véhicule.

Avantageusement et de manière non limitative, chaque élément latéral peut être conformé de sorte que, lorsque la boîte à eau est montée sur des éléments de structure du véhicule, une partie avant de l'élément latéral n'est pas supportée par ces éléments de structure du véhicule et cette partie avant peut basculer et/ou se déformer vers le bas en cas de choc piéton.

Ce basculement et/ou cette déformation participe également à l'amortissement ou absorption du choc piéton permettant de réduire ou limiter les dommages corporels.

L'invention concerne également une structure avant de véhicule comprenant une boîte à eau selon l'invention montée de sorte que le bord avant s'étende sensiblement transversalement au véhicule.

Avantageusement et de manière non limitative, la boîte à eau peut être montée sur des éléments de structure du véhicule de sorte qu'une partie avant de chaque élément latéral de la boîte à eau n'est pas supportée par ces éléments de structure du véhicule, et que sous l'effet d'un choc piéton, ladite partie avant bascule et/ou se déforme vers le bas par rotation autour d'une ligne correspondant à une ligne d'appui de l'élément latéral sur un élément de structure du véhicule.

Un tel agencement permet l'amortissement ou absorption d'un choc, en particulier d'un choc piéton, et ainsi la réduction des dommages corporels, au moyen :
- de la poutre de renfort de la partie centrale de la boîte à eau,
- de la zone de flexion de chaque élément latéral,
- du basculement et/ou de la déformation de la partie avant de chaque élément latéral.

L'invention est maintenant décrite en référence aux dessins annexés, non limitatifs, dans lesquels :
- la figure 1 est une vue de dessus d'une boîte à eau conforme à l'invention ;
- la figure 2 est une section de l'élément central suivant la ligne A-A de la figure 1 ;
- la figure 3 est une représentation en perspective d'un élément latéral de la boîte à eau représentée sur la figure 1 ;
- les figures 4 et 5 sont des sections du bord avant de l'élément latéral respectivement selon les lignes B-B et C-C de la figure 3,
- la figure 6 est un agrandissement de la partie droite de la figure 1 ;
- la figure 7 est un schéma d'implantation de la boîte à eau dans l'avant d'un véhicule ;

Dans la présente description, les termes avant, respectivement arrière, supérieur/haut, inférieur/bas, font référence aux directions avant respectivement arrière, supérieur/haut, inférieur/bas du véhicule, lorsque la boîte à eau est montée sur le véhicule. Les axes X, Y, Z, correspondent respectivement à l'axe longitudinal (d'avant en arrière), transversal et vertical du véhicule.

Par sensiblement horizontal, respectivement longitudinal ou vertical, on entend une direction/un plan formant un angle d'au plus ± 10° avec une direction/un plan horizontal, respectivement longitudinal ou vertical.

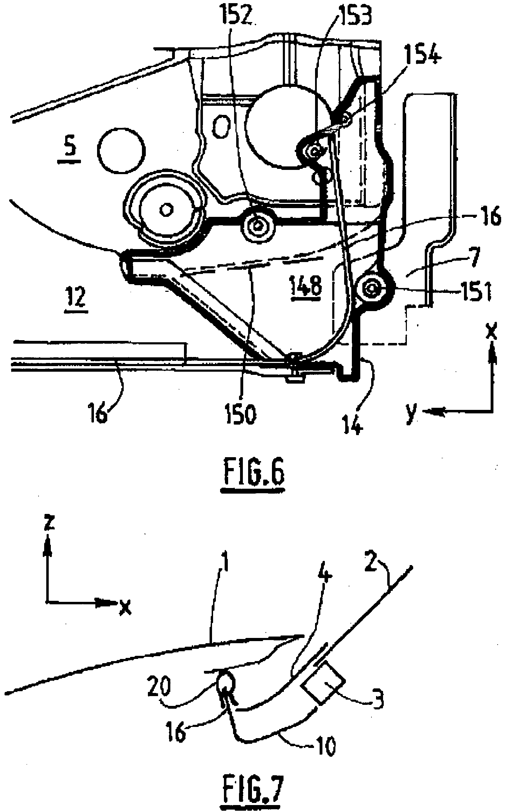

Comme le montre schématiquement la figure 7, la boîte à eau 10 sous forme générale d'une gouttière ouverte vers le haut, est disposée sous et à l'arrière du capot 1 du véhicule, devant le pare-brise 2 qui repose sur la traverse inférieure de baie 3. Une grille d'auvent 4 ferme l'ouverture supérieure de la boîte à eau 10. La boîte à eau 10 présente ainsi une forme générale allongée.

Lorsqu'elle est montée sur le véhicule, la direction longitudinale de la boîte à eau 10 s'étend suivant la direction transversale du véhicule. Une longueur correspond ainsi à une dimension suivant la direction transversale du véhicule lorsque la boîte à eau est montée.

La boîte à eau 10 est réalisée en matière plastique, par exemple par injection.

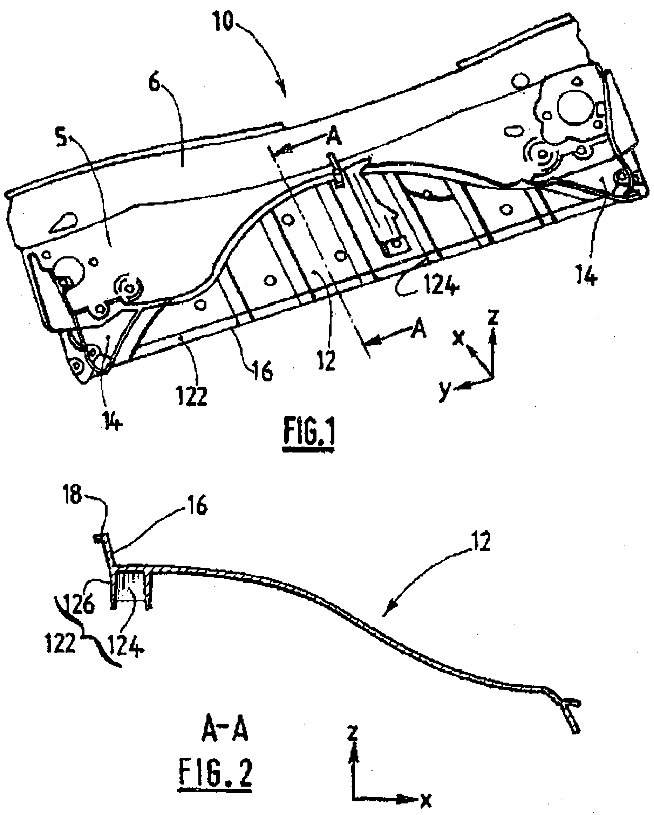

La boîte à eau 10 peut être formée d'une ou plusieurs pièces. Dans l'exemple représenté, la boîte à eau 10 comprend un élément central 12 et deux éléments latéraux 14 situés de part et d'autre de l'élément central 12 et solidaires de celui-ci (figure 1).

L'élément central 12 et les éléments latéraux 14 représentés sur les figures sont des éléments distincts. Ils peuvent cependant former une seule et unique pièce.

La boîte à eau 10 comporte également un bord avant 16 s'étendant le long de l'élément central 12 et des éléments latéraux 14, ce bord avant 16 étant sensiblement vertical et dirigé vers le haut transversalement au véhicule lorsque la boîte à eau est montée sur le véhicule. Ce bord avant 16 reçoit sur son arête supérieure 18 un joint 20 (figures 2 et 7) sur lequel le capot 1 vient appuyer lorsqu'il est fermé.

Ce bord avant 16 est ainsi continu sur toute la longueur de la boîte à eau 10 et est porté par l'élément central 12 et chaque élément latéral 14. Le bord avant 16 d'un élément central 12 ou d'un élément latéral 14 correspond ainsi à la portion de bord avant 16 portée par cet élément central 12, respectivement élément latéral 14. Le bord avant 16 s'étend de manière sensiblement rectiligne transversalement au véhicule sur toute la longueur de la boîte à eau 10 puis bifurque au niveau des extrémités latérales de la boîte à eau 10 vers l'arrière du véhicule sensiblement suivant la direction longitudinale du véhicule, formant ainsi des coins 11 sur les éléments latéraux 14.

Dans l'exemple représenté, l'élément central 12 et les éléments latéraux 14 qui ferment la boîte à eau 10 sont montés sur une cloison sensiblement horizontale 5 solidaire de la cloison 6 sensiblement verticale (appelée tablier) séparant l'habitacle du compartiment moteur (figure 1) et dont l'extrémité supérieure est fixée à la traverse inférieure de baie 3. Ainsi les parois de la boîte à eau 10 de l'exemple sont formées de cette cloison horizontale 5, de l'élément central 12, des éléments latéraux 14 et du tablier 6. L'élément central 12 et les éléments latéraux 14 pourraient bien entendu être directement solidarisés au tablier 6, voire à la traverse inférieure de baie 3. La boîte à eau 10 est en outre fixée sur chaque côté latéral de la caisse à des éléments de structure 7 du véhicule, par exemple un élément de structure destiné à la fixation des ailes du véhicule (figure 6) ou une doublure de pied avant.

Les éléments latéraux 14 représentent chacun environ 1/3 de la moitié de la longueur de la boîte à eau 10, la moitié de l'élément central 12 représentant environ 2/3 de la moitié de la longueur de la boîte à eau 10.

Conformément à l'invention :
- l'élément central 12 comprend une poutre de renfort 122 s'étendant sur sensiblement toute sa longueur sous son bord avant 16, cette poutre de renfort 122 étant conformée pour agir en flexion sous l'effet d'un choc piéton,
- le bord avant 16 de chaque élément latéral 14 comprend au moins une zone de flexion 142 conformée pour permettre une flexion du bord avant 16 lors d'un choc piéton.

La poutre de renfort 122 représentée est formée d'une pluralité de nervures 124 sensiblement perpendiculaires au bord avant 16, ces nervures étant logées dans une gorge 126 à section transversale en U dont l'ouverture est dirigée vers le bas, tel que visible sur la figure 2. Ces nervures 124 peuvent s'étendre sur toute la dimension de l'élément central 12 suivant la direction longitudinale du véhicule et contribuer à la tenue de l'élément central 12.

La zone de flexion 142 de chaque élément latéral 14 s'étend parallèlement à la direction longitudinale du bord avant 16 sur une partie de la hauteur et de la longueur du bord avant 16 de chaque élément latéral. En particulier, la zone de flexion 142 peut s'étendre parallèlement à l'arête 18 du bord avant 16, tel que représenté.

Dans l'exemple représenté, la zone de flexion 142 est une zone d'épaisseur amoindrie par rapport à l'épaisseur du reste du bord avant 16. Cette zone de flexion 142 est située au niveau d'une partie arrondie du bord avant 16 formant un coin 11 de la boîte à eau, ce qui permet de réduire la rigidité de ce coin.

La zone de flexion 142 peut présenter une hauteur de 2 à 5 mm. Cette hauteur peut correspondre à la moitié de la hauteur du bord avant 16.

L'épaisseur de la zone de flexion 142 doit être inférieure à l'épaisseur du reste du bord avant 16 afin de permettre la flexion de ce bord avant 16 lors d'un choc piéton. Cette épaisseur peut correspondre à l'épaisseur minimale réalisable selon le matériau et la technique de fabrication utilisée. Dans le cas d'une pièce réalisée par injection de matière plastique, l'épaisseur minimale est de l'ordre de 0,8mm, le reste du bord avant 16 présentant une épaisseur de l'ordre de 2,5mm.

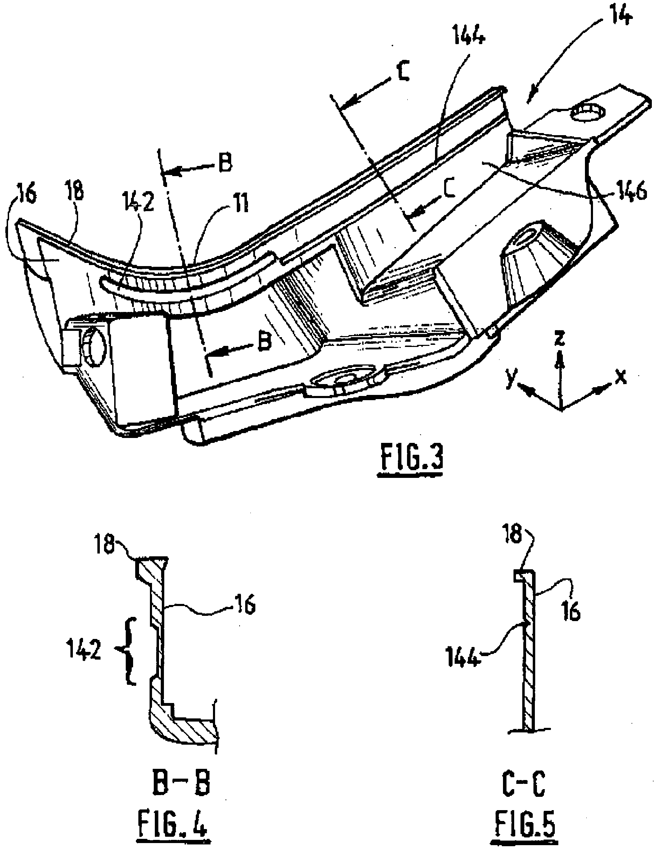

Le bord avant 16 de chaque élément latéral 14 présente également une ligne de rupture 144 conformée pour se rompre sous l'effet d'un choc piéton, après flexion de la zone de flexion 142. Cette ligne de rupture 144 s'étend sensiblement parallèlement à la direction longitudinale du bord avant 16 (et à l'arête 18 dans l'exemple) et se présente sous la forme d'une ligne de striction prolongeant sensiblement la zone de flexion 142 de chaque élément latéral 14. Cette ligne de rupture 144 est située sur un côté 146 de l'élément latéral 14 (figure 3), ce côté 146 s'étendant suivant la direction longitudinale X du véhicule.

Enfin, chaque élément latéral 14 est conformé de sorte que, lorsque la boîte à eau 10 est montée sur des éléments de structure du véhicule, une partie avant 148 de l'élément latéral 14 n'est pas supportée par ces éléments de structure du véhicule. Ces éléments de structure sont par exemple la cloison horizontale 5, appelée parfois cloison de chauffage. La partie avant 148 se trouve ainsi en porte à faux, par exemple sur une distance de 120 à 130 mm. Sur la figure 6, les points de fixation de l'élément latéral 14 sont représentés. L'élément latéral 14 est ainsi fixé sur l'élément de structure 7 au moyen d'une fixation 151, sur la cloison horizontale 5 au moyen de trois fixations 152, 153, 154. L'élément latéral 14 est ainsi retenu en partie arrière par ses fixations 152, 153, 154 ce qui favorise l'absorption du choc lors de la déformation/basculement de la partie avant 148 de l'élément central 14. Cette déformation basculement de la partie avant 148 peut en outre entrainer une rupture de la fixation latérale 151 de l'élément latéral 14.

Sous l'effet d'un choc piéton, la partie avant 148 de l'élément latéral 14 peut alors basculer ou être déformée vers le bas par rotation autour d'une ligne d'appui 150 correspondant sensiblement au bord de la cloison horizontale 5 sur lequel il repose (figure 6). Sur la figure 6, les contours de l'élément latéral 14 ont été volontairement épaissis afin d'en faciliter la distinction.

A titre d'exemple, le comportement en flexion de la boîte à eau 10 représentée sur les figures peut être déterminé sur la base des données suivantes, correspondant à un choc piéton (choc tête contre capot).

On considère un impact obtenu par déplacement dans le plan X/Z d'une surface rigide de 10cm x 10cm selon une direction formant un angle de 60° par rapport à l'axe X, cet impact se produisant au niveau du bord avant 16 de la boîte à eau 10.

Pour un impacteur d'une masse de 3,5 kg projeté à une vitesse de 6 m/s, un exemple de spécifications à ne pas dépasser selon la position de l'impact suivant la direction transversale sont rassemblées dans le tableau 1.

Ces spécifications sont établies en considérant :
- une épaisseur de capot (distance entre la peau externe et la doublure interne du capot) de 30 mm,
- un taux de compression de la doublure interne du capot de 0%,
- une distance séparant l'arête 18 du bord avant 16 et la doublure interne du capot de 19mm,
- une épaisseur incompressible du joint 20 de 5 mm,
- un taux de compression du joint de 50%.

Les positions d'impacts sont indiquées par rapport à la position sur l'axe transversal Y du repère X, Y, Z, la position Y = 0 correspondant au centre du véhicule (plan médian du véhicule).

**Tableau 1**

| Position d'impact | | Spécifications maximales |
|---|---|---|
| Elément central de boîte à eau | Y =0 | Dd = 45 mm |
| | Y=-/+200mm | Fd = 200 daN |
| | Y =-/+400 mm | Ed = 54,0 J |
| Elément latéral de boîte à eau | Y =-/+600 mm | Dd = 30.0 mm |
| | Y =-/+642 mm | Fd = 200 daN Ed = 36,0 J |

Dans le tableau 1 :
Dd est la distance d'enfoncement de la boîte à eau par rapport à sa position avant choc,
Fd est l'effort d'enfoncement subi par la boîte à eau lors du choc,
Ed est l'énergie d'enfoncement de la boîte à eau absorbée par la boîte à eau lors du choc.

Selon leur position en Y, les zones de flexion de la boîte à eau et la poutre de renfort seront ainsi conformées de manière à permettre un déplacement de 30mm à 45mm vers le bas de la boîte à eau.

## Revendications

1. Boîte à eau (10) destinée à être montée sur une structure avant d'un véhicule, cette boîte à eau comportant :
- un élément central (12) et deux éléments latéraux (14) situés de part et d'autre de l'élément central (12) et solidaires de celui-ci,
- un bord avant (16) s'étendant le long desdits éléments central (12) et latéraux (14), ce bord avant (16) étant sensiblement vertical et dirigé vers le haut transversalement au véhicule lorsque la boîte à eau (10) est montée sur le véhicule,
**caractérisée en ce que**
- l'élément central (12) comprend une poutre de renfort (122) s'étendant sur sensiblement toute sa longueur sous son bord avant (16), ladite poutre de renfort (122) étant conformée pour agir en flexion sous l'effet d'un choc piéton,
- le bord avant (16) de chaque élément latéral (14) comprend au moins une zone de flexion (142) conformée pour permettre une flexion du bord avant (16) sous l'effet d'un choc piéton.

2. Boîte à eau (10) selon la revendication 1, **caractérisée en ce que** la poutre de renfort (122) est formée d'une pluralité de nervures (124) sensiblement perpendiculaires au bord avant (16), ces nervures (124) étant logées dans une gorge (126) à section transversale en U.

3. Boîte à eau (10) selon la revendication 1 ou 2, **caractérisée en ce que** la zone de flexion (142) s'étend parallèlement à la direction longitudinale du bord avant (16) sur une partie de la hauteur et de la longueur du bord avant (16) de chaque élément latéral.

4. Boîte à eau (10) selon l'une quelconque des revendications 1 à 3, **caractérisée en ce que** la zone de flexion (142) est une zone d'épaisseur amoindrie par rapport à l'épaisseur du reste du bord avant (16) ou une ouverture.

5. Boîte à eau (10) selon l'une des revendications 3 ou 4, **caractérisée en ce que** la zone de flexion (142) présente une hauteur de 2 à 5 mm et/ou présente une épaisseur inférieure ou égale à 1,5 mm, de préférence inférieure ou égale à 0,8mm.

6. Boîte à eau (10) selon l'une quelconque des revendications 1 à 5, **caractérisée en ce que** la zone de flexion (142) est située au niveau d'une partie arrondie du bord avant (16) formant un coin (11) de la boîte à eau (10).

7. Boîte à eau (10) selon l'une quelconque des revendications 1 à 6, **caractérisée en ce que** le bord avant (16) de chaque élément latéral (14) présente une ligne de rupture (144) conformée pour se rompre sous l'effet d'un choc piéton, après flexion de ladite au moins une zone de flexion (142), ladite ligne de rupture (144) s'étendant sensiblement parallèlement à la direction longitudinale du bord avant (16).

8. Boîte à eau (10) selon l'une quelconque des revendications 1 à 7, **caractérisée en ce que** chaque élément latéral (14) est conformé de sorte que, lorsque la boîte à eau (10) est montée sur des éléments de structure du véhicule, une partie avant (148) de l'élément latéral (14) n'est pas supportée par ces éléments de structure du véhicule et cette partie avant (148) peut basculer et/ou se déformer vers le bas en cas de choc piéton.

9. Structure avant de véhicule comprenant une boîte à eau (10) selon l'une quelconque des revendications précédentes montée de sorte que le bord avant (16) s'étende sensiblement transversalement au véhicule.

10. Structure avant de véhicule selon la revendication 9, **caractérisée en ce que** la boîte à eau (10) est montée sur des éléments de structure du véhicule de sorte qu'une partie avant (148) de chaque élément latéral (14) de la boîte à eau (10) n'est pas supportée par ces éléments de structure du véhicule, et que sous l'effet d'un choc piéton, ladite partie avant (148) bascule et/ou se déforme vers le bas par rotation autour d'une ligne (150) correspondant à une ligne d'appui de l'élément latéral (14) sur un élément de structure du véhicule.

## Patentansprüche

1. Wasserkasten (10), der dazu bestimmt ist, auf eine Frontstruktur eines Fahrzeugs montiert zu werden, wobei dieser Wasserkasten aufweist:
- ein zentrales Element (12) und zwei seitliche Elemente (14), die sich zu beiden Seiten des zentralen Elements (12) befinden und fest mit diesem verbunden sind,
- eine Vorderkante (16), die sich entlang der zentralen (12) und seitlichen Elemente (14) erstreckt, wobei diese Vorderkante (16) im Wesentlichen senkrecht und quer zum Fahrzeug nach oben gerichtet ist, wenn der Wasserkasten (10) auf das Fahrzeug montiert ist,
**dadurch gekennzeichnet, dass**
- das zentrale Element (12) einen Verstärkungsbalken (122) enthält, der sich über im Wesentlichen seine ganze Länge unter seiner Vorderkante (16) erstreckt, wobei der Verstärkungsbalken (122) gestaltet ist, um unter der Einwirkung eines Fußgängeraufpralls biegend zu wirken,
- die Vorderkante (16) jedes seitlichen Elements (14) mindestens eine Biegezone (142) enthält, die gestaltet ist, um eine Biegung der Vorderkante (16) unter der Wirkung eines Fußgängeraufpralls zu erlauben.

2. Wasserkasten (10) nach Anspruch 1, **dadurch gekennzeichnet, dass** der Verstärkungsbalken (122) von einer Vielzahl von Rippen (124) im Wesentlichen lotrecht zur Vorderkante (16) gebildet wird, wobei diese Rippen (124) in einer Rille (126) mit U-förmigem Querschnitt untergebracht sind.

3. Wasserkasten (10) nach Anspruch 1 oder 2, **dadurch gekennzeichnet, dass** die Biegezone (142) sich parallel zur Längsrichtung der Vorderkante (16) über einen Teil der Höhe und der Länge der Vorderkante (16) jedes seitlichen Elements erstreckt.

4. Wasserkasten (10) nach einem der Ansprüche 1 bis 3, **dadurch gekennzeichnet, dass** die Biegezone (142) eine Zone verringerter Dicke bezüglich der Dicke des Rests der Vorderkante (16) oder eine Öffnung ist.

5. Wasserkasten (10) nach einem der Ansprüche 3 oder 4, **dadurch gekennzeichnet, dass** die Biegezone (142) eine Höhe von 2 bis 5 mm und/oder eine Dicke von weniger als oder gleich 1,5 mm, vorzugsweise weniger als oder gleich 0,8 mm aufweist.

6. Wasserkasten (10) nach einem der Ansprüche 1 bis 5, **dadurch gekennzeichnet, dass** die Biegezone (142) sich im Bereich eines abgerundeten Teils der Vorderkante (16) befindet, der eine Ecke (11) des Wasserkastens (10) bildet.

7. Wasserkasten (10) nach einem der Ansprüche 1 bis 6, **dadurch gekennzeichnet, dass** die Vorderkante (16) jedes seitlichen Elements (14) eine Bruchlinie (144) aufweist, die gestaltet ist, um unter der Wirkung eines Fußgängeraufpralls nach dem Biegen der mindestens einen Biegezone (142) zu brechen, wobei die Bruchlinie (144) sich im Wesentlichen parallel zur Längsrichtung der Vorderkante (16) erstreckt.

8. Wasserkasten (10) nach einem der Ansprüche 1 bis 7, **dadurch gekennzeichnet, dass** jedes seitliche Element (14) so gestaltet ist, dass, wenn der Wasserkasten (10) auf Strukturelemente des Fahrzeugs montiert ist, ein vorderer Teil (148) des seitlichen Elements (14) nicht von diesen Strukturelementen des Fahrzeugs getragen wird, und dieser vordere Teil (148) bei einem Fußgängeraufprall kippen und/oder sich nach unten verformen kann.

9. Frontstruktur eines Fahrzeugs, die einen Wasserkasten (10) nach einem der vorhergehenden Ansprüche enthält, der so montiert ist, dass die Vorderkante (16) sich im Wesentlichen quer zum Fahrzeug erstreckt.

10. Frontstruktur eines Fahrzeugs nach Anspruch 9, **dadurch gekennzeichnet, dass** der Wasserkasten (10) derart auf Strukturelemente des Fahrzeugs montiert ist, dass ein vorderer Teil (148) jedes seitlichen Elements (14) des Wasserkastens (10) nicht von diesen Strukturelementen des Fahrzeugs getragen wird, und dass unter der Wirkung eines Fußgängeraufpralls der vordere Teil (148) durch Drehung um eine Linie (150), die einer Auflagelinie des seitlichen Elements (14) auf einem Strukturelement des Fahrzeugs entspricht, kippt und/oder sich nach unten verformt.

## Claims

1. Water box scuttle panel (10) intended to be mounted on a front structure of a vehicle, this water box scuttle panel comprising:
- a central element (12) and two lateral elements (14) which are situated one on each side of the central element (12) and secured thereto,
- a front edge (16) extending along the said central (12) and lateral (14) elements, this front edge (16) being substantially vertical and directed upwards transversally to the vehicle when the water box scuttle panel (10) is mounted on the vehicle,
**characterized in that**
- the central element (12) comprises a reinforcing beam (122) extending over substantially its entire length under its front edge (16), the said reinforcing beam (122) being configured to bend under the effect of a pedestrian impact,
- the front edge (16) of each lateral element (14) comprises at least one bending zone (142) configured to allow the front edge (16) to flex under the effect of a pedestrian impact.

2. Water box scuttle panel (10) according to Claim 1, **characterized in that** the reinforcing beam (122) is formed of a plurality of ribs (124) substantially perpendicular to the front edge (16), these ribs (124) being housed in a channel (126) of U-shaped cross section.

3. Water box scuttle panel (10) according to Claim 1 or 2, **characterized in that** the bending zone (142) extends parallel to the longitudinal direction of the front edge (16) over part of the height and the length of the front edge (16) of each lateral element.

4. Water box scuttle panel (10) according to any one of Claims 1 to 3, **characterized in that** the bending zone (142) is a zone of lesser thickness in comparison with the thickness of the rest of the front edge (16) or an opening.

5. Water box scuttle panel (10) according to one of Claims 3 and 4, **characterized in that** the bending zone (142) has a height of 2 to 5 mm and/or a thickness less than or equal to 1.5 mm, preferably less than or equal to 0.8 mm.

6. Water box scuttle panel (10) according to any one of Claims 1 to 5, **characterized in that** the bending zone (142) is situated at the level of a rounded part of the front edge (16) forming a corner (11) of the water box scuttle panel (10).

7. Water box scuttle panel (10) according to any one of Claims 1 to 6, **characterized in that** the front edge (16) of each lateral element (14) has a rupture line (144) configured to break under the effect of a pedestrian impact, after the said at least one bending zone (142) is flexed, the said rupture line (144) running substantially parallel to the longitudinal direction of the front edge (16).

8. Water box scuttle panel (10) according to any one of Claims 1 to 7, **characterized in that** each lateral element (14) is configured so that when the water box scuttle panel (10) is mounted on structural elements of the vehicle, a front part (148) of the lateral element (14) is not supported by these structural elements of the vehicle and this front part (148) can tilt and/or deform downwards in the event of a pedestrian impact.

9. Vehicle front structure comprising a water box scuttle panel (10) according to any one of the preceding claims mounted in such a way that the front edge (16) extends substantially transversally to the vehicle.

10. Vehicle front structure according to Claim 9, **characterized in that** the water box scuttle panel (10) is mounted on structural elements of the vehicle in such a way that a front part (148) of each lateral element (14) of the water box scuttle panel (10) is not supported by these structural elements of the vehicle and that under the effect of a pedestrian impact, the said front part (148) tilts and/or deforms downwards by rotation about a line (150) corresponding to a line via which the lateral element (14) rests against a structural element of the vehicle.
